# EUROPEAN PATENT SPECIFICATION

(11) **EP 4 253 749 B1**
(45) Date of publication and mention of the grant of the patent: **02.07.2025**
(21) Application number: 23157428.6
(22) Date of filing: 18.02.2023
(51) Int. Cl.: F02M 26/12, F02M 26/41, F02M 26/23, F02M 26/16

(54) **EGR DEVICE FOR INTERNAL COMBUSTION ENGINE**
AGR-VORRICHTUNG FÜR EINEN VERBRENNUNGSMOTOR
DISPOSITIF EGR POUR MOTEUR À COMBUSTION INTERNE

(30) Priority: 31.03.2022 JP 2022059897
(43) Date of publication of application: 04.10.2023
(73) Proprietor: Suzuki Motor Corporation, Hamamatsu-shi, Shizuoka 432-8611 (JP)
(72) Inventor: YAMAMOTO, Kanji, HAMAMATSU-SHI, 432-8611 (JP)
(74) Representative: Plasseraud IP

(56) References cited:
- EP-A1- 3 085 943
- EP-A1- 3 734 056
- WO-A1-2021/182075
- US-A1- 2020 102 916
- US-A1- 2022 364 532

## Description

### [Technical Field]

The present invention relates to an EGR device for an internal combustion engine.

### [Background Art]

There has been known an engine including an EGR (Exhaust Gas Recirculation) device which refluxes a part of exhaust gas to an intake side (see Patent Literature 1, Patent Literature 2, Patent Literature 3, or Patent Literature 4).

The EGR device for the engine includes an EGR valve which adjusts a flow rate of EGR gas, and the EGR valve is supported on the engine with fixing hardware in the manner of a cantilever.

### [Citation List]

### [Patent Literature]

[Patent Literature 1] JP 7000969 B2
[Patent Literature 2] WO 2021/182075 A1
[Patent Literature 3] EP 3085943 A1
[Patent Literature 4] US 2020/102916 A1

### [Summary of Invention]

### [Technical Problem]

In such a conventional engine, the EGR valve is supported on the engine with the fixing hardware in the manner of a cantilever.

The EGR valve is a heavy component including an actuator for valve operation. Since the EGR valve is just supported on the engine with the fixing hardware in the manner of a cantilever, stiffness in support of the EGR valve is low, and the EGR valve vibrates due to vibration of the engine. For this reason, control accuracy of the EGR valve may deteriorate.

The present invention has been made in view of the above-described circumstances, and an object thereof is to provide an EGR device for an internal combustion engine capable of enhancing stiffness in support of the EGR valve on a cylinder head cover to prevent the EGR valve from vibrating to thereby prevent control accuracy of the EGR valve from deteriorating.

### [Solution to Problem]

According to the present invention, there is provided an EGR device for an internal combustion engine according to claim 1.

### [Advantageous Effects of Invention]

According to the present invention described above, it is possible to enhance stiffness in support of the EGR valve on the cylinder head cover to prevent the EGR valve from vibrating to thereby prevent control accuracy of the EGR valve from deteriorating.

### [Brief Description of Drawings]

Figure 1 is a front view of an internal combustion engine including an EGR device according to an embodiment of the present invention.
Figure 2 is a left side view of the internal combustion engine including the EGR device according to the embodiment of the present invention.
Figure 3 is a front view of a cylinder head and a cylinder head cover of the internal combustion engine according to the embodiment of the present invention.
Figure 4 is a left side view of the cylinder head and the cylinder head cover of the internal combustion engine according to the embodiment of the present invention.
Figure 5 is a plan view of an EGR housing portion of the internal combustion engine according to the embodiment of the present invention.
Figure 6 is a perspective view of a front wall side of the EGR housing portion of the internal combustion engine according to the embodiment of the present invention.

### [Description of Embodiment]

An EGR device according to an embodiment of the present invention is configured to be mounted on an internal combustion engine of which a body is provided with an exhaust passage portion into which an exhaust gas from the body is introduced, the body including a cylinder head cover, the cylinder head cover including: an exhaust side wall located on one of both sides of the body where the exhaust passage portion is installed; an intake side wall located on the other side of the body; and a connection wall that connects the exhaust side wall and the intake side wall to each other, the EGR device including: an EGR passage portion branching from the exhaust passage portion to circulate, as an EGR gas, a part of the exhaust gas in the exhaust passage portion into the body; and an EGR valve to adjust a flow rate at which the EGR gas flows through the EGR passage portion, wherein the EGR valve is fastened to a first fastening portion and a second fastening portion, the first fastening portion being provided at an intersection where the exhaust side wall and the connection wall intersect, the second fastening portion being provided at the exhaust side wall.

With the above-described configuration, the EGR device for the internal combustion engine according to the embodiment of the present invention can enhance stiffness in support of the EGR valve on the cylinder head cover to prevent the EGR valve from vibrating to thereby prevent control accuracy of the EGR valve from deteriorating.

### [Embodiment]

An EGR device for an internal combustion engine according to an embodiment of the present invention will be described below with reference to the drawings.

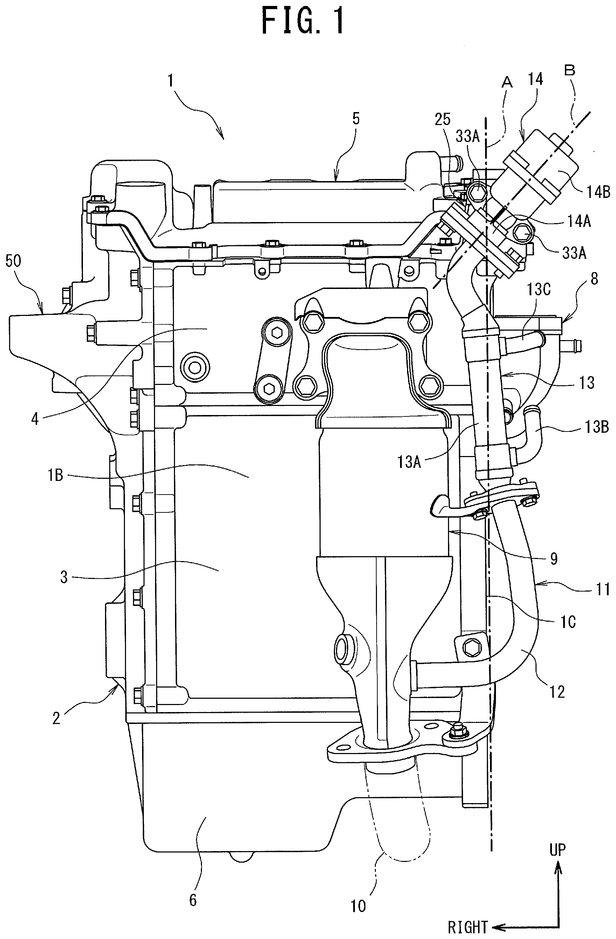

Figures 1 to 6 show the EGR device for the internal combustion engine according to the embodiment of the present invention. In Figures 1 to 6, up-down, front-rear, and left-right directions corresponds to those in an internal combustion engine mounted on a vehicle. Hereinafter, a front-rear direction in a vehicle will be simply referred to as front-rear direction; a left-right direction therein (vehicle width direction) will be simply referred to as left-right direction; and an up-down direction therein (vehicle height direction) will be simply referred to as up-down direction.

A configuration will be described first.

In Figure 1, an engine 1 is provided in an engine room (not shown) of a vehicle. The engine 1 has an engine body 2, and the engine body 2 is composed of a cylinder block 3, a cylinder head 4, a cylinder head cover 5, and an oil pan 6. The engine 1 and the engine body 2 according to the present embodiment constitute an internal combustion engine and a body thereof respectively.

The cylinder head 4 is attached to an upper portion of the cylinder block 3, and the cylinder head cover 5 is attached to an upper portion of the cylinder head 4. The oil pan 6 is attached to a lower portion of the cylinder block 3, and lubrication oil for the engine 1 is accumulated in the oil pan 6.

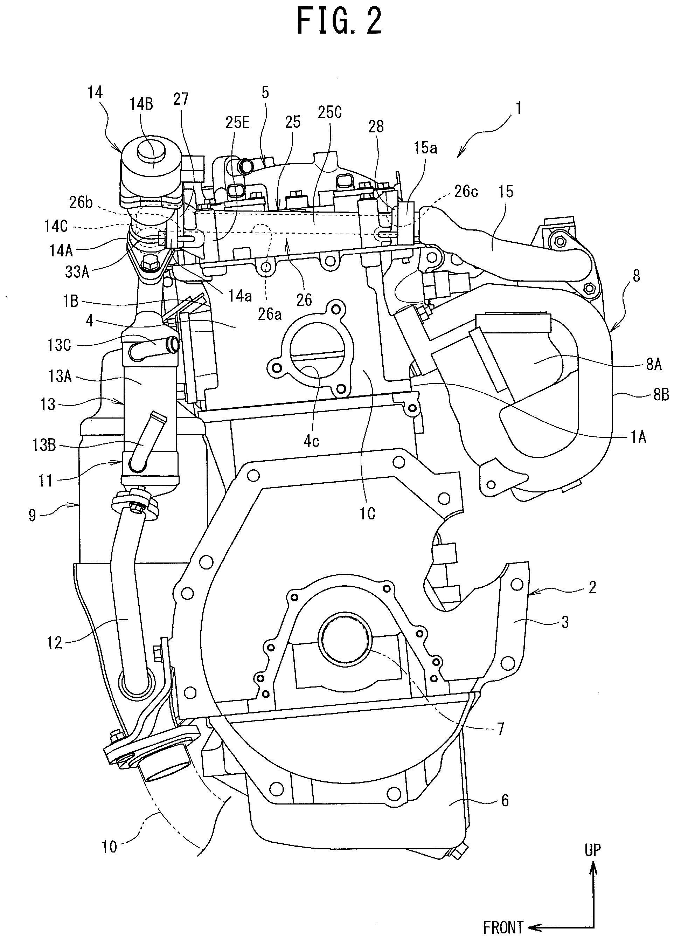

A plurality of cylinders (not shown) are provided in the cylinder block 3, and the cylinders are arrayed in the vehicle width direction. Respective pistons (not shown) are housed in the cylinders, and each piston is connected to a crankshaft 7 (see Figure 2) via a connecting rod (not shown).

The engine 1 according to the present embodiment is a transversely mounted engine with the crankshaft 7 extending in the vehicle width direction, and the vehicle is an FF (front-engine, front-wheel drive) vehicle.

Each piston reciprocates inside the cylinder, thereby rotating the crankshaft 7 via the connecting rod.

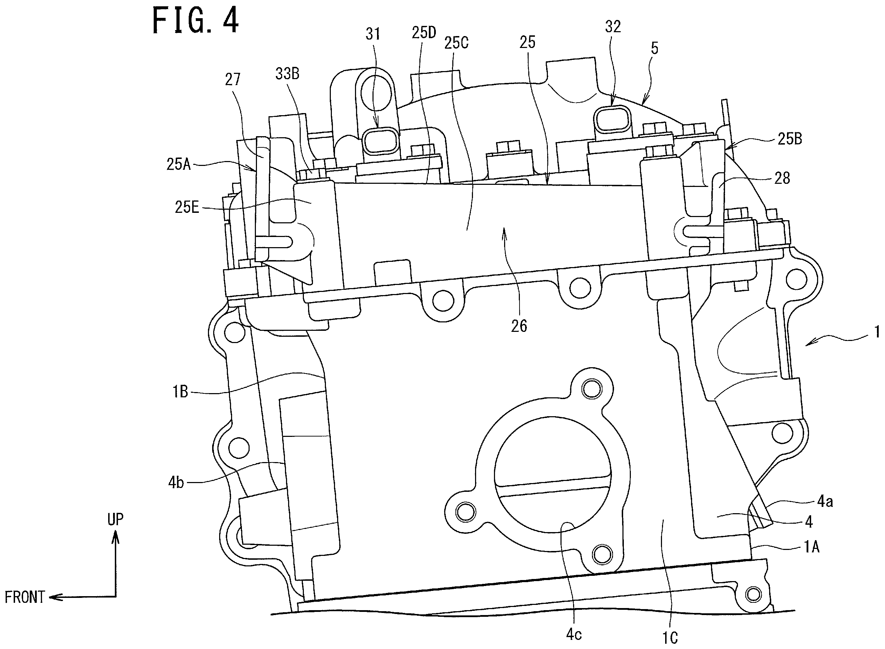

A plurality of intake ports 4a and an exhaust collection portion 4b (see Figure 4) are formed in the cylinder head 4. The exhaust collection portion 4b according to the present embodiment constitutes an exhaust outlet.

The intake ports 4a communicate with the respective cylinders and introduce incoming air into the cylinders. The exhaust collection portion 4b communicates with the respective cylinders through a plurality of exhaust ports (not shown). That is, the exhaust ports extend from the respective cylinders to the exhaust collection portion 4b, and the exhaust collection portion 4b collects the exhaust ports.

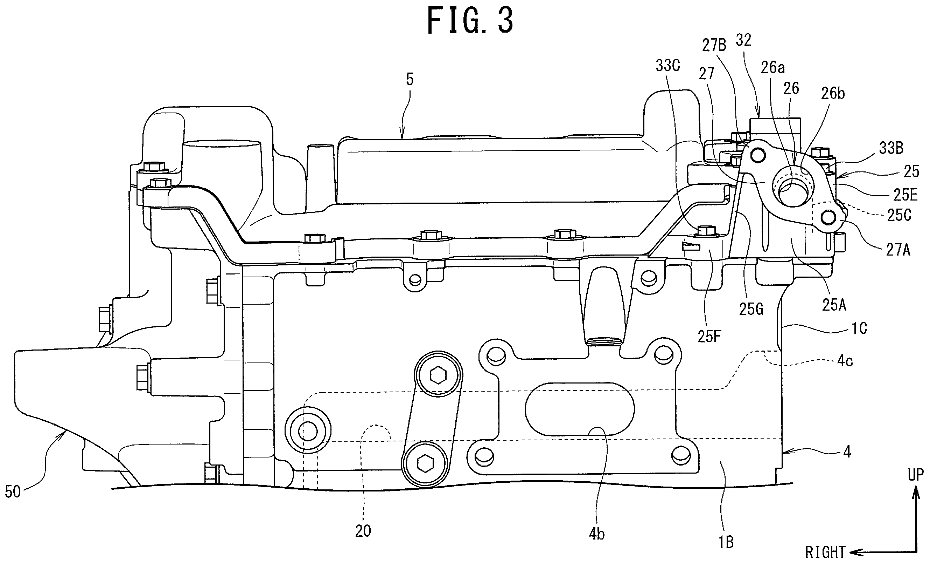

As indicated by imaginary lines in Figure 3, a coolant passage 20 is provided in the cylinder head 4. The coolant passage 20 extends from a right end portion of the cylinder head 4 toward a left end portion.

Coolant is introduced from a coolant passage (not shown) which is formed in the cylinder block 3 into a right end portion of the coolant passage 20. The coolant introduced into the coolant passage 20 flows to the left along the coolant passage 20. For this reason, the cylinder head 4 is cooled by the coolant.

As shown in Figures 2 and 4, the engine 1 has an intake side wall 1A on a side where the intake ports 4a open and an exhaust side wall 1B which is located on a side (a front side) opposite to the intake side wall 1A and is on a side where the exhaust collection portion 4b opens.

The intake side wall 1A forms rear walls of the cylinder block 3, the cylinder head 4, and the cylinder head cover 5 at which the intake ports 4a open, and the exhaust side wall 1B forms front walls of the cylinder block 3, the cylinder head 4, and the cylinder head cover 5 at which the exhaust collection portion 4b opens.

As shown in Figure 4, the engine 1 has a coolant discharge side wall 1C. At the coolant discharge side wall 1C, a coolant discharge port 4c which discharges coolant from the coolant passage 20 is formed in the cylinder head 4.

The coolant discharge side wall 1C is connected to a left end portion of the intake side wall 1A and a left end portion of the exhaust side wall 1B and extends in the front-rear direction. A chain cover 50 is attached to a right side wall on the opposite side of the engine 1 from the coolant discharge side wall 1C (see Figure 1).

As shown in Figure 2, an intake manifold 8 is attached to the intake side wall 1A. The intake manifold 8 has a surge tank 8A and a plurality of branch pipes 8B (one of which is shown) corresponding in number to the cylinders.

For example, if the engine 1 is a 3-cylinder engine, three branch pipes 8B are provided. An intake pipe (not shown) is connected to the surge tank 8A via a throttle body (not shown).

Incoming air which is cleaned by an air cleaner (not shown) is introduced into the intake pipe, and the incoming air is introduced into the surge tank 8A through the throttle body.

A throttle valve (not shown) is housed in the throttle body, and the throttle valve adjusts the amount of incoming air to be introduced into the surge tank 8A.

The plurality of branch pipes 8B extend from the surge tank 8A to the respective intake ports 4a and distribute incoming air which is introduced into the surge tank 8A among the respective intake ports 4a.

As shown in Figures 1 and 2, an exhaust cleaning device 9 is attached to the exhaust side wall 1B. Exhaust gas which is burned inside each cylinder is discharged from the cylinder through the exhaust port and collected in the exhaust collection portion 4b, and is then discharged from the exhaust collection portion 4b into the exhaust cleaning device 9.

The exhaust cleaning device 9 cleans exhaust gas which is discharged from the exhaust collection portion 4b and discharges the cleaned exhaust gas into the atmosphere through an exhaust pipe 10 which is connected to a downstream end of the exhaust cleaning device 9. The exhaust cleaning device 9 and the exhaust pipe 10 according to the present embodiment constitute an exhaust passage portion.

The engine 1 is provided with an EGR (exhaust gas recirculation) device 11. The EGR device 11 includes upstream-side EGR piping 12, an EGR cooler 13, an EGR valve 14, and downstream-side EGR piping 15.

An upstream end of the upstream-side EGR piping 12 is connected to the exhaust cleaning device 9 and branches from the exhaust cleaning device 9. A part of exhaust gas is introduced as EGR gas from the exhaust cleaning device 9 into the upstream-side EGR piping 12. The terms upstream and downstream here refer to upstream and downstream in a direction in which incoming air, exhaust gas, or EGR gas flows.

The EGR valve 14 is located downstream of the upstream-side EGR piping 12, and the upstream-side EGR piping 12 is located upstream of the EGR valve 14.

The EGR cooler 13 is provided adjacent to the exhaust cleaning device 9 at the exhaust side wall 1B of the engine 1.

A downstream end of the upstream-side EGR piping 12 is connected to an upstream end of the EGR cooler 13. The EGR cooler 13 has an EGR cooler body portion 13A through which EGR gas and coolant flow, a coolant introduction portion 13B which introduces coolant into the EGR cooler body portion 13A, and a coolant discharge portion 13C which discharges the coolant from the EGR cooler 13.

The EGR cooler 13 cools EGR gas which is introduced from the upstream-side EGR piping 12 by heat exchange between the EGR gas and coolant.

A downstream end of the EGR cooler 13 is connected to the EGR valve 14, and the EGR valve 14 is connected to an EGR housing portion 25. The EGR valve 14 adjusts a flow rate of EGR gas which flows through an EGR housing passage portion 26 (to be described later).

An upstream end of the downstream-side EGR piping 15 is connected to the EGR housing portion 25, and EGR gas which is introduced into the EGR housing portion 25 is discharged into the downstream-side EGR piping 15. A downstream end of the downstream-side EGR piping 15 is connected to the surge tank 8A, and the EGR gas discharged into the downstream-side EGR piping 15 is introduced into the surge tank 8A.

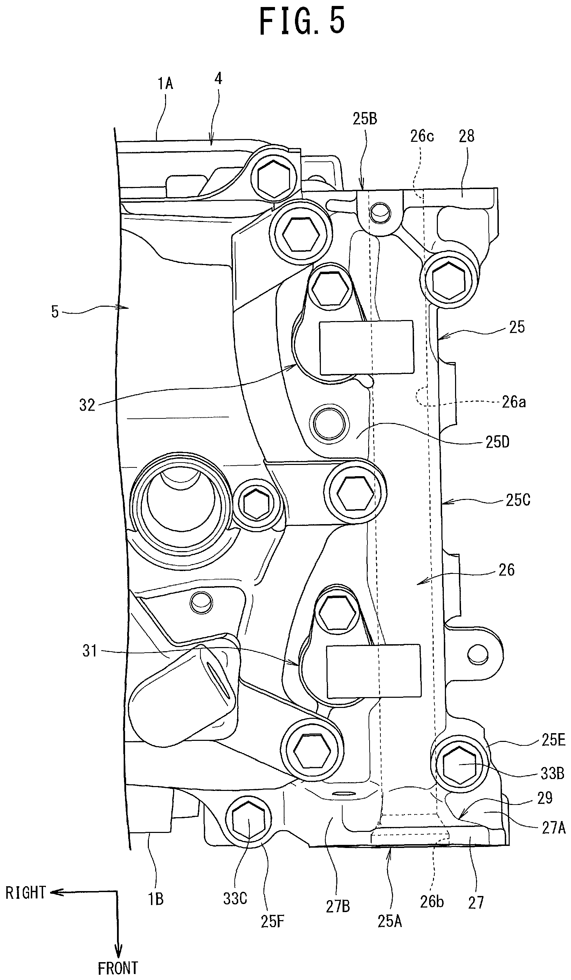

As shown in Figures 2 and 5, the EGR housing portion 25 that is separate from the cylinder head 4 is provided on the left end portion of the cylinder head 4. The EGR housing portion 25 is provided to the left of the cylinder head cover 5 and is adjacent to the cylinder head cover 5.

The cylinder head cover 5 is made of resin, and the EGR housing portion 25 is made of metal, such as an aluminum die-casting.

As shown in Figure 5, the EGR housing portion 25 has a front wall 25A, a rear wall 25B, a left side wall 25C, and an upper wall 25D.

The front wall 25A constitutes a part of the exhaust side wall 1B of the engine 1, and the rear wall 25B constitutes a part of the intake side wall 1A of the engine 1. That is, the front wall 25A is formed on the same side as the exhaust side wall 1B of the engine 1, and the rear wall 25B is located on the opposite side from the front wall 25A and is formed on the same side as the intake side wall 1A.

The left side wall 25C connects a left end portion of the front wall 25A and a left end portion of the rear wall 25B, and the upper wall 25D connects an upper end portion of the front wall 25A, an upper end portion of the rear wall 25B, and an upper end portion of the left side wall 25C. The left side wall 25C according to the present embodiment constitutes a connection wall.

As shown in Figure 5, the EGR housing passage portion 26 is provided in the EGR housing portion 25. The EGR housing passage portion 26 is formed in a tubular shape, and an EGR passage 26a through which EGR gas flows is formed inside the EGR housing passage portion 26.

As shown in Figures 2 and 5, the EGR housing passage portion 26 has an EGR gas introduction port 26b and an EGR gas discharge port 26c. The EGR gas introduction port 26b is provided at the front wall 25A (see Figure 3), and the EGR gas discharge port 26c is provided at the rear wall 25B.

The EGR gas introduction port 26b is an open end on an upstream side of the EGR passage 26a, and the EGR gas discharge port 26c is an open end on a downstream side of the EGR passage 26a. The EGR housing passage portion 26 is obliquely provided such that the EGR gas introduction port 26b is located above the EGR gas discharge port 26c.

The EGR passage 26a is composed of a through-hole which extends from the EGR gas introduction port 26b to the EGR gas discharge port 26c, and the EGR gas introduction port 26b is located at a position higher than the EGR gas discharge port 26c (see Figure 2). The EGR passage 26a according to the present embodiment constitutes a through-hole.

The upstream-side EGR piping 12, the EGR cooler 13, the EGR housing passage portion 26, and the downstream-side EGR piping 15 according to the present embodiment constitute the EGR passage portion. A part of exhaust gas which is discharged into the exhaust cleaning device 9 is refluxed to the intake manifold 8 through the upstream-side EGR piping 12, the EGR cooler 13, the EGR housing passage portion 26, and the downstream-side EGR piping 15.

The EGR housing passage portion 26 constitutes a head cover EGR passage portion, the EGR gas introduction port 26b constitutes an exhaust-side open portion, and the EGR gas discharge port 26c constitutes an intake-side open portion.

As shown in Figure 3, a flange portion 27 is provided at the front wall 25A, and the flange portion 27 is provided above the exhaust collection portion 4b. The EGR gas introduction port 26b is formed inside the flange portion 27, and the flange portion 27 surrounds the EGR gas introduction port 26b.

A first fastening portion 27A and a second fastening portion 27B both of which are boss-shaped are provided on the flange portion 27. The first fastening portion 27A is provided at an intersection 29 at which the front wall 25A and the left side wall 25C intersect (see Figure 5). The second fastening portion 27B is provided at the front wall 25A.

As shown in Figure 3, the first fastening portion 27A and the second fastening portion 27B are away from each other in a left-right direction, and the first fastening portion 27A is provided diagonally below the left of the second fastening portion 27B, the first fastening portion 27A being located at the left side of the second fastening portion 27B. That is, the first fastening portion 27A and the second fastening portion 27B are away from each other in a horizontal direction (the left-right direction), of which height positions are different from each other.

Note that the first fastening portion 27A may be located above the second fastening portion 27B. That is, the first fastening portion 27A may be provided diagonally above the left of the second fastening portion 27B, the first fastening portion 27A being located at the left side of the second fastening portion 27B.

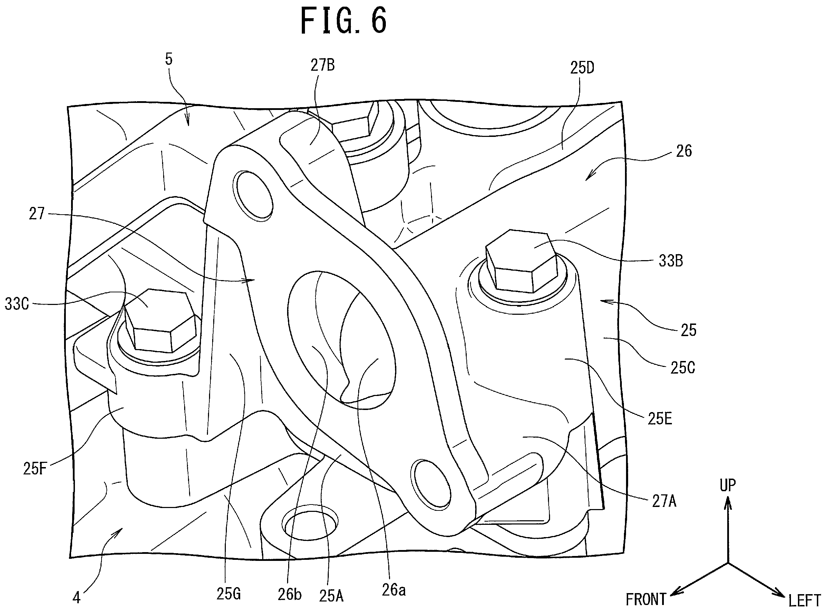

As shown in Figure 6, a boss portion 25E is provided at the left side wall 25C of the EGR housing portion 25, and the first fastening portion 27A is connected to the boss portion 25E and the EGR housing passage portion 26.

Specifically, the EGR housing passage portion 26 includes the EGR passage 26a of a through-hole formed therein, the EGR housing passage portion being formed in a tubular shape so as to surround the EGR passage 26a. Thus, the first fastening portion 27A is connected to an outer wall of such a tubular EGR housing passage portion 26.

The boss portion 25E is fastened to the cylinder head 4 by a bolt 33B and thus, the left side wall 25C is fixed to the cylinder head 4 through the boss portion 25E and the bolt 33B.

A boss portion 25F is provided at the front wall 25A of the EGR housing portion 25. The boss portion 25F is fastened to the cylinder head 4 by a bolt 33C and thus, the front wall 25A is fixed to the cylinder head 4 through the boss portion 25F and the bolt 33C.

A rib 25G is provided at the front wall 25A. The rib 25G extends upward from the boss portion 25F toward the second fastening portion 27B and connects the boss portion 25F and the second fastening portion 27B to each other.

The bolt 33B and the bolt 33C according to the present embodiment constitute a first fastener and a second fastener respectively. The boss portion 25E constitutes a connection wall fixing portion, and the boss portion 25F constitutes an exhaust side wall fixing portion.

As shown in Figure 1, the EGR valve 14 has an EGR valve body 14A and a driving portion 14B. An EGR passage portion is formed inside the EGR valve body 14A, this EGR passage portion communicating between the EGR passage portion formed inside the EGR cooler 13 and the EGR housing passage portion 26.

A valve element 14C (see Figure 2) is provided in the EGR valve body 14A of the EGR valve 14, and the valve element 14C adjusts the degree of opening of the EGR passage portion in the EGR valve body 14A.

The driving portion 14B is connected to the EGR valve body 14A, and drives the valve element 14C to adjust the degree of opening of the EGR passage portion in the EGR valve body 14A and adjusts a flow rate of EGR gas which flows through the EGR housing passage portion 26.

A flange portion 14a is provided on the EGR valve body 14A. In the EGR valve 14, the flange portion 14a is fastened to the first fastening portion 27A and the second fastening portion 27B of the flange portion 27 by bolts 33A in a state where the flange portion 14a is positioned on the flange portion 27.

With the above-described configuration, the EGR valve 14 is attached to the front wall 25A of the EGR housing portion 25 so as to cover the EGR gas introduction port 26b. The bolt 33A according to the present embodiment constitutes a third fastener. The flange portion 27 constitutes an internal combustion engine-side flange portion, and the flange portion 14a constitutes an EGR valve-side flange portion.

The EGR valve 14 according to the present embodiment is attached to the front wall 25A of the EGR housing portion 25 to be located above the exhaust collection portion 4b and the exhaust cleaning device 9.

As shown in Figures 2 and 5, a flange portion 28 is provided at the rear wall 25B, and the EGR gas discharge port 26c is formed inside the flange portion 28.

A flange portion 15a of the downstream-side EGR piping 15 is attached to the flange portion 28. An EGR gas introduction port (not shown) is provided inside the flange portion 15a, and EGR gas which flows through the EGR passage 26a is discharged from the EGR gas discharge port 26c into the downstream-side EGR piping 15 through the EGR gas introduction port in the flange portion 15a.

In other words, in the engine 1 according to the present embodiment, the EGR housing portion 25 is attached to the left end portion of the cylinder head 4 on and above the cylinder head 4, and EGR gas is introduced from an exhaust side to an intake side by the EGR housing passage portion 26 provided in the EGR housing portion 25.

The EGR housing portion 25 according to the present embodiment constitutes a cylinder head cover. Note that the EGR housing portion 25 may be integral with the cylinder head cover 5 and that the EGR housing passage portion 26 may be formed in the cylinder head cover 5.

As shown in Figure 1, the EGR valve 14 is installed such that a central axis B thereof is inclined at an angle of about 45 degrees with respect to a vertical axis A in front view of the engine 1. The driving portion 14B is farther away from the exhaust cleaning device 9 than the EGR valve body 14A is, the EGR valve body 14A being located between the driving portion 14B and the exhaust cleaning device 9.

As shown in Figure 4, an exhaust cam angle sensor 31 and an intake cam angle sensor 32 are attached to the upper wall 25D of the EGR housing portion 25. The exhaust cam angle sensor 31 detects a rotational angle (rotational phase) of an exhaust camshaft (not shown), and the intake cam angle sensor 32 detects a rotational angle (rotational phase) of an intake camshaft (not shown).

Effects of the EGR device 11 for the engine 1 according to the present embodiment will be described.

The EGR device 11 for the engine 1 according to the present embodiment includes the upstream-side EGR piping 12, the EGR cooler 13, the EGR housing passage portion 26, and the downstream-side EGR piping 15 that branch from the exhaust cleaning device 9 and reflux, as EGR gas, a part of exhaust gas flowing through the exhaust cleaning device 9 to the intake manifold 8 and the EGR valve 14 that adjusts a flow rate of EGR gas which flows through the EGR housing passage portion 26.

Additionally, the EGR valve 14 is fastened to the first fastening portion 27A that is provided at the intersection 29 where the front wall 25A and the left side wall 25C of the EGR housing portion 25 intersect and the second fastening portion 27B that is provided at the front wall 25A.

The intersection 29 where the front wall 25A and the left side wall 25C intersect has high stiffness and is impervious to vibration and deformation. For this reason, fastening of the EGR valve 14 to at least two points that are the first fastening portion 27A that is provided at the high-stiffness intersection 29 and the second fastening portion 27B that is provided at the front wall 25A allows enhancement of stiffness in support of the EGR valve 14 and suppression of vibration of the EGR valve 14.

As a result, it is possible to inhibit control accuracy of the EGR valve 14 from deteriorating and enhance reliability of the EGR valve 14. The control accuracy here refers to accuracy of opening and closing the valve element 14C.

In the EGR device 11 for the engine 1 according to the present embodiment, the EGR housing portion 25 has the boss portion 25E that is provided at the left side wall 25C and attaches the left side wall 25C to the cylinder head 4 by the bolt 33B, and the first fastening portion 27A is connected to the boss portion 25E.

Since the first fastening portion 27A is connected to the high-stiffness boss portion 25E that is fastened to the cylinder head 4 by the bolt 33B, stiffness of the first fastening portion 27A can be further enhanced.

For the above-described reason, fastening of the EGR valve 14 to the higher-stiffness first fastening portion 27A allows further enhancement of the stiffness in support of the EGR valve 14 and more effective suppression of vibration of the EGR valve 14.

As a result, it is possible to more effectively inhibit the control accuracy of the EGR valve 14 from deteriorating and further enhance the reliability of the EGR valve 14.

In the EGR device 11 for the engine 1 according to the present embodiment, the EGR housing portion 25 has the boss portion 25F that is provided at the front wall 25A and attaches the front wall 25A to the cylinder head 4 by the bolt 33C.

Additionally, the second fastening portion 27B is connected to the boss portion 25F by the rib 25G that is provided at the front wall 25A.

With the above-described configuration, the high-stiffness boss portion 25F that is fastened to the cylinder head 4 by the bolt 33C is connected to the second fastening portion 27B by the high-stiffness rib 25G, and stiffness of the second fastening portion 27B can be further enhanced.

For the above-described reason, fastening of the EGR valve 14 to the higher-stiffness second fastening portion 27B allows further enhancement of the stiffness in support of the EGR valve 14 and more effective suppression of vibration of the EGR valve 14.

As a result, it is possible to more effectively inhibit the control accuracy of the EGR valve 14 from deteriorating and further enhance the reliability of the EGR valve 14.

In the EGR device 11 for the engine 1 according to the present embodiment, the EGR housing portion 25 has the EGR housing passage portion 26 that constitutes a part of the EGR passage portion, and the EGR housing passage portion 26 is formed in a tubular shape which has the EGR passage 26a that extends from the EGR gas introduction port 26b formed at the front wall 25A of the EGR housing portion 25 to the EGR gas discharge port 26c formed at the rear wall 25B.

Additionally, the first fastening portion 27A is connected to the boss portion 25E and the EGR housing passage portion 26.

With the above-described configuration, connection of the first fastening portion 27A to the EGR housing passage portion 26 that is formed in a tubular shape and thus has high stiffness and the high-stiffness boss portion 25E allows further enhancement of the stiffness of the first fastening portion 27A.

For the above-described reason, fastening of the EGR valve 14 to the higher-stiffness first fastening portion 27A allows further enhancement of the stiffness in support of the EGR valve 14 and more effective suppression of vibration of the EGR valve 14.

As a result, it is possible to more effectively inhibit the control accuracy of the EGR valve 14 from deteriorating and further enhance the reliability of the EGR valve 14.

In the EGR device 11 for the engine 1 according to the present embodiment, the first fastening portion 27A and the second fastening portion 27B are away in the horizontal direction (left-right direction) and are installed at different height positions.

With the above-described configuration, the EGR valve 14 can be effectively inhibited from vibrating in the up-down direction and the left-right direction.

Specifically, if the first fastening portion 27A and the second fastening portion 27B are installed to be vertically lined up, the EGR valve 14 is likely to vibrate in the left-right direction. If the first fastening portion 27A and the second fastening portion 27B are installed to be laterally lined up, the EGR valve 14 is likely to vibrate in the up-down direction.

In contrast, if the first fastening portion 27A and the second fastening portion 27B are installed to be away in the horizontal direction and at different height positions, the EGR valve 14 can be made less likely to vibrate in the up-down direction and the left-right direction than in a case where the first fastening portion 27A and the second fastening portion 27B are installed to be vertically lined up and in a case where the first fastening portion 27A and the second fastening portion 27B are installed to be laterally lined up.

As a result, it is possible to more effectively inhibit the control accuracy of the EGR valve 14 from deteriorating and further enhance the reliability of the EGR valve 14.

In the EGR device 11 for the engine 1 according to the present embodiment, the flange portion 27 that has the first fastening portion 27A and the second fastening portion 27B is provided at the front wall 25A of the EGR housing portion 25, and the flange portion 14a that is in contact with the flange portion 27 and is fastened to the first fastening portion 27A and the second fastening portion 27B by the bolts 33A is provided at the EGR valve 14.

With the above-described configuration, the flange portion 14a and the flange portion 27 can be brought into contact over a wide area, and the EGR valve 14 can be more effectively inhibited from vibrating by further enhancing the stiffness in support of the EGR valve 14.

As a result, it is possible to more effectively inhibit the control accuracy of the EGR valve 14 from deteriorating and further enhance the reliability of the EGR valve 14.

### [Reference Signs List]

1: engine (internal combustion engine)
2: engine body (body of internal combustion engine)
3: cylinder block
4: cylinder head
5: cylinder head cover
9: exhaust cleaning device (exhaust passage portion)
10: exhaust pipe (exhaust passage portion)
11: EGR device
12: upstream-side EGR piping (EGR passage portion)
13: EGR cooler (EGR passage portion)
14: EGR valve
14a: flange portion (EGR valve-side flange portion)
15: downstream-side EGR piping (EGR passage portion)
25: EGR housing portion (cylinder head cover)
25A: front wall (exhaust side wall)
25B: rear wall (intake side wall)
25E: boss portion (connection wall fixing portion)
25F: boss portion (exhaust side wall fixing portion)
25G: rib
26: EGR housing passage portion (EGR passage portion, head cover EGR passage portion)
26a: EGR passage (through-hole)
26b: EGR gas introduction port (exhaust-side open portion)
26c: EGR gas exhaust port (intake-side open portion)
27: flange portion (internal combustion engine-side flange portion)
27A: first fastening portion
27B: second fastening portion
29: intersection
33A: bolt (third fastener)
33B: bolt (first fastener)
33C: bolt (second fastener)

## Claims

1. An internal combustion engine (1) with an EGR device (11), a body (2) of the internal combustion engine (1) being provided with an exhaust passage portion (9, 10) into which an exhaust gas from the body (2) is introduced,
the body (2) including: a cylinder block (3); a cylinder head (4) attached to an upper portion of the cylinder block (3); and a cylinder head cover (5, 25) attached to an upper portion of the cylinder head (4),
the cylinder head cover (5, 25) including: an exhaust side wall (25A) located on one of both sides of the body (2) where the exhaust passage portion (9, 10) is installed; an intake side wall (25B) located on the other side of the body (2), being away from the exhaust side wall (25A); and a connection wall (25C) extending between the exhaust side wall (25A) and the intake side wall (25B), to connect the exhaust side wall (25A) and the intake side wall (25B) to each other,
the EGR device (11) comprising:
an EGR passage portion (12, 13, 26, 15) branching from the exhaust passage portion (9, 10) to circulate, as an EGR gas, a part of the exhaust gas in the exhaust passage portion (9, 10) into the body (2); and
an EGR valve (14) to adjust a flow rate at which the EGR gas flows through the EGR passage portion (12, 13, 26, 15), wherein
the cylinder head cover (5, 25) includes a head cover EGR passage portion (26) that constitutes a part of the EGR passage portion (12, 13, 26, 15),
the head cover EGR passage portion (26) includes a through-hole (26a) that extends from an exhaust-side open portion (26b) to an intake-side open portion (26c), the exhaust-side open portion being formed at the exhaust side wall (25A) of the cylinder head cover (5, 25), the intake-side open portion (26c) being formed at the intake side wall (25B) thereof, and
the EGR valve (14) is attached to the exhaust side wall (25A) so as to cover the exhaust-side open portion (26b), the EGR valve (14) being fastened to a first fastening portion (27A) and a second fastening portion (27B), the first fastening portion being provided at an intersection (29) where the exhaust side wall (25A) and the connection wall (25C) intersect, the second fastening portion (27B) being provided at the exhaust side wall (25A).

2. The internal combustion engine (1) with an EGR device (11) as claimed in claim 1, wherein
the cylinder head cover (5, 25) includes a connection wall fixing portion (25E) provided at the connection wall (25C), the connection wall fixing portion being configured to attach the connection wall (25C) to the cylinder head (4) by a first fastener (33B), and
the first fastening portion (27A) is connected to the connection wall fixing portion (25E).

3. The internal combustion engine (1) with an EGR device (11) as claimed in claim 1 or 2, wherein
the cylinder head cover (5, 25) includes an exhaust side wall fixing portion (25F) provided at the exhaust side wall (25A), the exhaust side wall fixing portion being configured to attach the exhaust side wall (25A) to the cylinder head (4) by a second fastener (33C), and
the second fastening portion (27B) is connected to the exhaust side wall fixing portion (25F) via a rib (25G) provided at the exhaust side wall (25A).

4. The internal combustion engine (1) with an EGR device (11) as claimed in claim 2, wherein
the first fastening portion (27A) is connected to the connection wall fixing portion (25E) and the EGR passage portion (12, 13, 26, 15).

5. The internal combustion engine (1) with an EGR device (11) as claimed in any one of claims 1 to 4, wherein
the first fastening portion (27A) and the second fastening portion (27B) are away from each other in a horizontal direction, of which height positions are different from each other.

6. The internal combustion engine (1) with an EGR device (11) as claimed in any one of claims 1 to 5, wherein
an internal combustion engine-side flange portion (27) is provided at the exhaust side wall (25A), the internal combustion engine-side flange portion being provided with the first and second fastening portions (27A, 27B), and
an EGR valve-side flange portion (14a) provided at the EGR valve (14) comes into contact with the internal combustion engine-side flange portion (27), the EGR valve-side flange portion (14a) being fastened to the first fastening portion (27A) and the second fastening portion (27B) by a third fastener (33A).

## Patentansprüche

1. Verbrennungsmotor(1) mit einer EGR-Vorrichtung (11), wobei ein Körper (2) des Verbrennungsmotors (1) mit einem Auslassdurchgangsabschnitt (9, 10) bereitgestellt ist, in welchen ein Abgas von dem Körper (2) eingeführt ist,
wobei der Körper (2) umfasst: einen Zylinderblock (3); einen Zylinderkopf (4), welcher an einem oberen Abschnitt des Zylinderblocks (3) angebracht ist; und eine Zylinderkopfabdeckung (5, 25), welche an einem oberen Abschnitt des Zylinderkopfes (4) angebracht ist,
wobei die Zylinderkopfabdeckung (5, 25) umfasst: eine Auslassseitenwand (25A), welche an einer von beiden Seiten des Körpers (2) angeordnet ist, wo der Auslassdurchgangsabschnitt (9, 10) installiert ist; eine Aufnahmeseitenwand (25B), welche an der anderen Seite des Körpers (2) angeordnet ist, wobei sie von der Auslassseitenwand (25A) abgewandt ist; und eine Verbindungswand (25C), welche sich zwischen der Auslassseitenwand (25A) und der Aufnahmeseitenwand (25B) erstreckt, um die Auslassseitenwand (25A) und die Aufnahmeseitenwand (25B) miteinander zu verbinden,
wobei die EGR-Vorrichtung (11) umfasst:
einen EGR-Durchgangsabschnitt (12, 13, 26, 15), welcher von dem Auslassdurchgangsabschnitt (9, 10) abzweigt, um einen Teil des Abgases als ein EGR-Gas in dem Auslassdurchgangsabschnitt (9, 10) in den Körper (2) zu zirkulieren; und
ein EGR-Ventil (14), um eine Flussrate anzupassen, mit welcher das EGR-Gas durch den EGR-Durchgangsabschnitt (12, 13, 26, 15) fließt, wobei
die Zylinderkopfabdeckung (5, 25) einen Kopfabdeckungs-EGR-Durchgangsabschnitt (26) umfasst, welcher einen Teil des EGR-Durchgangsabschnitts (12, 13, 26, 15) darstellt,
der Kopfabdeckungs-EGR-Durchgangsabschnitt (26) ein Durchgangsloch (26a) umfasst, welches sich von einem offenen Abschnitt (26b) einer Auslassseite zu einem offenen Abschnitt (26c) einer Aufnahmeseite erstreckt, wobei der offene Abschnitt der Auslassseite an der Auslassseitenwand (25A) der Zylinderkopfabdeckung (5, 25) gebildet ist, wobei der offene Abschnitt (26c) der Aufnahmeseite an der Aufnahmeseitenwand (25B) davon gebildet ist, und
das EGR-Ventil (14) an der Auslassseitenwand (25A) derart angebracht ist, dass es den offenen Abschnitt (26b) der Auslassseite bedeckt, wobei das EGR-Ventil (14) an einem ersten Befestigungsabschnitt (27A) und an einem zweiten Befestigungsabschnitt (27B) befestigt ist, wobei der erste Befestigungsabschnitt an einer ersten Schnittstelle (29) bereitgestellt ist, wo die Auslassseitenwand (25A) und die Verbindungswand (25C) sich schneiden, wobei der zweite Befestigungsabschnitt (27B) an der Auslassseitenwand (25A) bereitgestellt ist.

2. Verbrennungsmotor (1) mit einer EGR-Vorrichtung (11) nach Anspruch 1, wobei
die Zylinderkopfabdeckung (5, 25) einen Verbindungswandfixierungsabschnitt (25E) umfasst, welcher an der Verbindungswand (25C) bereitgestellt ist, wobei
der Verbindungswandfixierungsabschnitt dazu eingerichtet ist, die Verbindungswand (25C) an dem Zylinderkopf (4) durch einen ersten Befestiger (33B) anzubringen, und
der erste Befestigungsabschnitt (27A) mit dem Verbindungswandfixierungsabschnitt (25E) verbunden ist.

3. Verbrennungsmotor (1) mit einer EGR-Vorrichtung (11) nach Anspruch 1 oder 2, wobei
die Zylinderkopfabdeckung (5, 25) einen Auslassseitenwandfixierungsabschnitt (25F) umfasst, welcher an der Auslassseitenwand (25A) bereitgestellt ist, wobei der Auslassseitenwandfixierungsabschnitt dazu eingerichtet ist, die Auslassseitenwand (25A) durch einen zweiten Befestiger (33C) an dem Zylinderkopf (4) anzubringen, und
der zweite Befestigungsabschnitt (27B) mit dem Auslassseitenwandfixierungsabschnitt (25F) über eine Rippe (25G) verbunden ist, welche an der Auslassseitenwand (25A) bereitgestellt ist.

4. Verbrennungsmotor (1) mit einer EGR-Vorrichtung (11) nach Anspruch 2, wobei
der erste Befestigungsabschnitt (27A) mit dem Verbindungswandfixierungsabschnitt (25E) und dem EGR-Durchgangsabschnitt (12, 13, 26, 15) verbunden ist.

5. Verbrennungsmotor (1) mit einer EGR-Vorrichtung (11) nach einem der Ansprüche 1 bis 4, wobei
der erste Befestigungsabschnitt (27A) und der zweite Befestigungsabschnitt (27B) voneinander in einer horizontalen Richtung entfernt sind, von denen Höhenpositionen voneinander verschieden sind.

6. Verbrennungsmotor (1) mit einer EGR-Vorrichtung (11) nach einem der Ansprüche 1 bis 5, wobei
ein Verbrennungsmotor-Seitenflanschabschnitt (27) an der Auslassseitenwand (25A) bereitgestellt ist, wobei der Verbrennungsmotor-Seitenflanschabschnitt mit dem ersten und zweiten Befestigungsabschnitt (27A, 27B) bereitgestellt ist, und
ein EGR-Ventil-Seitenflanschabschnitt (14a), welcher an dem EGR-Ventil (14) bereitgestellt ist, mit dem Verbrennungsmotor-Seitenflanschabschnitt (27) in Kontakt kommt, wobei der EGR-Ventil-Seitenflanschabschnitt (14a) an dem ersten Befestigungsabschnitt (27A) und dem zweiten Befestigungsabschnitt (27B) durch einen dritten Befestiger (33A) befestigt ist.

## Revendications

1. Moteur à combustion interne (1) avec un dispositif EGR (11), un corps (2) du moteur à combustion interne (1) étant doté d'une partie de passage d'échappement (9, 10) dans laquelle est introduit un gaz d'échappement provenant du corps (2),
le corps (2) comportant : un bloc-cylindres (3) ; une culasse (4) fixée à une partie supérieure du bloc-cylindres (3) ; et un couvre-culasse (5, 25) fixé à une partie supérieure de la culasse (4),
le couvre-culasse (5, 25) comportant : une paroi latérale d'échappement (25A) située sur l'un des deux côtés du corps (2) où la partie de passage d'échappement (9, 10) est installée ; une paroi latérale d'admission (25B) située sur l'autre côté du corps (2), à l'écart de la paroi latérale d'échappement (25A) ; et une paroi de connexion (25C) s'étendant entre la paroi latérale d'échappement (25A) et la paroi latérale d'admission (25B), pour connecter entre elles la paroi latérale d'échappement (25A) et la paroi latérale d'admission (25B),
le dispositif EGR (11) comprenant :
une partie de passage EGR (12, 13, 26, 15) se ramifiant de la partie de passage d'échappement (9, 10) pour faire circuler, en tant que gaz EGR, une partie du gaz d'échappement présent dans la partie de passage d'échappement (9, 10) dans le corps (2) ; et
une vanne EGR (14) pour ajuster un débit auquel le gaz EGR circule à travers la partie de passage EGR (12, 13, 26, 15), dans lequel
le couvre-culasse (5, 25) comporte une partie de passage EGR de couvre-culasse (26) qui constitue une partie de la partie de passage EGR (12, 13, 26, 15),
la partie de passage EGR de couvre-culasse (26) comporte un trou traversant (26a) qui s'étend d'une partie ouverte côté échappement (26b) à une partie ouverte côté admission (26c), la partie ouverte côté échappement étant formée au niveau de la paroi latérale d'échappement (25A) du couvre-culasse (5, 25), la partie ouverte côté admission (26c) étant formée au niveau de la paroi latérale d'admission (25B) de celle-ci, et
la vanne EGR (14) est fixée à la paroi latérale d'échappement (25A) de manière à recouvrir la partie ouverte côté échappement (26b), la vanne EGR (14) étant fixée à une première partie de fixation (27A) et à une deuxième partie de fixation (27B), la première partie de fixation étant disposée à une intersection (29) où la paroi latérale d'échappement (25A) et la paroi de connexion (25C) se croisent, la deuxième partie de fixation (27B) étant disposée au niveau de la paroi latérale d'échappement (25A).

2. Moteur à combustion interne (1) avec un dispositif EGR (11) selon la revendication 1, dans lequel
le couvre-culasse (5, 25) comporte une partie de fixation de paroi de connexion (25E) disposée au niveau de la paroi de connexion (25C), la partie de fixation de paroi de connexion étant configurée pour fixer la paroi de connexion (25C) à la culasse (4) par un premier élément de fixation (33B), et
la première partie de fixation (27A) est connectée à la partie de fixation de paroi de connexion (25E).

3. Moteur à combustion interne (1) avec un dispositif EGR (11) selon la revendication 1 ou 2, dans lequel
le couvre-culasse (5, 25) comporte une partie de fixation de paroi latérale d'échappement (25F) disposée au niveau de la paroi latérale d'échappement (25A), la partie de fixation de paroi latérale d'échappement étant configurée pour fixer la paroi latérale d'échappement (25A) à la culasse (4) par un deuxième élément de fixation (33C), et
la deuxième partie de fixation (27B) est connectée à la partie de fixation de paroi latérale d'échappement (25F) via une nervure (25G) fournie au niveau de la paroi latérale d'échappement (25A).

4. Moteur à combustion interne (1) avec un dispositif EGR (11) selon la revendication 2, dans lequel
la première partie de fixation (27A) est connectée à la partie de fixation de paroi de connexion (25E) et à la partie de passage EGR (12, 13, 26, 15).

5. Moteur à combustion interne (1) avec un dispositif EGR (11) selon l'une quelconque des revendications 1 à 4, dans lequel
la première partie de fixation (27A) et la deuxième partie de fixation (27B) sont éloignées l'une de l'autre dans une direction horizontale, les positions en hauteur de celles-ci étant différentes l'une de l'autre.

6. Moteur à combustion interne (1) avec un dispositif EGR (11) selon l'une quelconque des revendications 1 à 5, dans lequel
une partie de bride côté moteur à combustion interne (27) est disposée au niveau de la paroi latérale d'échappement (25A), la partie de bride côté moteur à combustion interne étant dotée des première et deuxième parties de fixation (27A, 27B), et
une partie de bride côté vanne EGR (14a) disposée au niveau de la vanne EGR (14) entre en contact avec la partie de bride côté moteur à combustion interne (27), la partie de bride côté vanne EGR (14a) étant fixée à la première partie de fixation (27A) et à la deuxième partie de fixation (27B) par un troisième élément de fixation (33A).
